# EUROPÄISCHE PATENTSCHRIFT

(11) **EP 1 024 319 B1**
(45) Veröffentlichungstag und Bekanntmachung des Hinweises auf die Patenterteilung: **09.04.2003**
(21) Anmeldenummer: 00100718.6
(22) Anmeldetag: 14.01.2000
(51) Int. Cl.: F16J 15/34

(54) **Gleitringdichtung für CO2-Kältemittelkompressor eines Kraftfahrzeuges**
Mechanical seal for a vehicle refrigerant compressor using CO2 as working fluid
Garniture mécanique d'étanchéité pour compresseur frigorifique de véhicule autombile utilisant du CO2 comme fluide frigorigène

(30) Priorität: 27.01.1999 DE 19903067
(43) Veröffentlichungstag der Anmeldung: 02.08.2000
(73) Patentinhaber: Burgmann Dichtungswerke GmbH & Co. KG, 82515 Wolfratshausen (DE)
(72) Erfinder: Reinfrank, Ulrich, 82544 Egling (DE); Goerlitz, Claudia, 81479 München (DE); Eckart, Jens, 82515 Wolfratshausen (DE); Kachler, Peter, 82049 Pullach (DE); Feigl, Peter, 82335 Höhenrain (DE); Schicktanz, Rudolf, 82538 Geretsried (DE)
(74) Vertreter: Haber, Jan Wilhelm

(56) Entgegenhaltungen:
- DE-B- 1 016 518
- DE-U- 7 404 061
- US-A- 2 871 040

## Beschreibung

Die Erfindung betrifft eine Gleitringdichtung zur Abdichtung der Antriebswelle des CO₂-Kältemittelkompressors eines Kraftfahrzeugs gegenüber dem ein CO₂-Ölgemisch enthaltenden Kompressorgehäuse, mit einem Paar Gleitringe, von denen einer als Gleitring drehfest an der Antriebswelle und der andere als Gegenring drehfest am Kompressorgehäuse montierbar ist, mit mindestens einem Druckmittel, das die beiden Gleitringe derart axial aneinander drückt, daß sich bei Betrieb zwischen den zusammenwirkenden Dichtflächen der Gleitringe ein Dichtspalt bildet, mit einem Dichtungsgehäuse, das die Gleitringe und das Druckmittel radial außen umgibt und diese vor und während der Montage der Gleitringdichtung als Verbindungsmittel zusammenhält, sowie mit einer ersten in die Gleitringdichtung integrierten Nebendichtung, die zwischen dem Kompressorgehäuse und dem drehfest daran montierbaren Gegenring wirkt, und einer zweiten in die Gleitringdichtung integrierten Nebendichtung, die zwischen der Antriebswelle und dem drehfest daran montierbaren Gleitring wirkt.

Aus der deutschen Patentschrift DE 1 016 518 sind Gleitringdichtungen für Wellen von Pumpen bekannt. In dieser Patentschrift wurde vorgeschlagen, die beiden Gleitringe vor und auch während ihres Einbaus durch Verbindungsmittel, insbesondere durch ein Gehäuse mit ihren beiden Dichtflächen aufeinanderliegend zusammenzuhalten, um das Eindringen von Fremdkörpern in den Dichtungsspalt auszuschließen. Damit eine einwandfreie Funktion der Gleitringdichtung gewährleistet ist, muß der Dichtungsspalt vollkommen rein und staubfrei sein, was sowohl bei der Aufbewahrung als auch bei der Montage der Gleitringdichtungen ein hohes Maß an Präzision und Sauberkeit verlangt.

Werden derartige Gleitringdichtungen zur Abdichtung eines CO₂-Klimakompressors in einem Kraftfahrzeug eingesetzt, so tritt eine weitere Anforderung hinzu. Klimakompressoren für den Einsatz in Kraftfahrzeugen müssen in sehr großen Stückzahlen mit optimierten Fertigungs- und Montagemethoden hergestellt werden, wobei der Einsatz einer automatisierten Montage unumgänglich ist. Für die schnelle und einfache Durchführbarkeit einer automatisierten Montage ist es von Nachteil, wenn zur Gleitringdichtung gehörende Komponenten, insbesondere die Nebendichtungen als separate Teile zugeführt werden müssen. Hierdurch werden zusätzliche Einbau- bzw. Montageschritte erforderlich, was zu längeren Montagezeiten und somit auch zu höheren Kosten führt.

Hierzu ist aus dem deutschen Gebrauchsmuster DE-GM 74 04 061 eine Gleitringdichtung bekannt, bei der die beiden Nebendichtungen in die Gleitringdichtung integriert sind. Für eine weitere Vereinfachung der Montage bzw. des Einbaus der Gleitringdichtung ist es jedoch wünschenswert, noch weitere Komponenten in geeigneter Weise in die Gleitringdichtung zu integrieren.

Aufgabe der Erfindung ist es daher, die Gleitringdichtung der eingangs genannten Art konstruktiv auf einfache und preiswerte Art so zu verbessern, daß sie insbesondere vor und während der Montage einschließlich der zugehörigen Komponenten leicht handhabbar und schnell montierbar ist. Insbesondere soll auch ein automatisierter Einbau der Gleitringdichtung schnell und einfach durchführbar sein.

Diese Aufgabe wird erfindungsgemäß durch eine Gleitringdichtung nach Anspruch 1 gelöst. Wesentlich ist dabei, daß die Gleitringdichtung ein relativ zum Dichtungsgehäuse axial verschiebbar gelagertes Drehmomentübertragungselement umfaßt, welches zur drehfesten Montage des Gleitrings an der Antriebswelle sowohl mit dem Gleitring als auch mit der Antriebswelle formschlüssig verbunden ist, und welches vor und während des Einbaus der Gleitringdichtung formschlüssig und/oder kraftschlüssig drehfest mit dem Dichtungsgehäuse verbunden ist und welches im eingebauten Zustand der Gleitringdichtung derart verschoben ist, daß der Formschluß oder Kraftschluß mit dem Dichtungsgehäuse aufgehoben ist.

Auf diese Weise wird bei einfacher Konstruktion eine Gleitringdichtung geschaffen, die auch bei einer automatisierten Robotermontage einfach, schnell und sicher mit allen zugehörigen Komponenten eingebaut werden kann. Nicht nur die beiden Nebendichtungen, sondern auch ein Drehmomentübertragungselement sind mit der Gleitringdichtung zu einer Einheit verbunden, die in einem einzigen Schritt montierbar ist.

Wichtig für den Betrieb der Gleitringdichtung ist, daß der Gleitring drehfest mit der Antriebswelle umläuft. Die einwandfreie Funktion der Gleitringdichtung ist nicht mehr gewährleistet, wenn zwischen der Antriebswelle und dem Gleitring eine rotatorische Relativbewegung stattfindet.

Deshalb ist der Gleitring üblicherweise formschlüssig mit der Antriebswelle oder einem drehfest damit verbundenen Teil verbunden. Diese formschlüssig drehfeste Verbindung kann in vorteilhafter Weise über ein Drehmomentübertragungselement erfolgen, das sowohl mit dem Gleitring als auch mit der Antriebswelle formschlüssig verbunden ist. Damit dieses Drehmomentübertragungselement auch bei einer automatisierten Montage durch Roboter auf einfache Weise eingebaut werden kann, wird vorgeschlagen, daß das Drehmomentübertragungselement vor und während des Einbaus der Gleitringdichtung form- oder kraftschlüssig drehfest mit dem Verbindungsmittel verbunden ist. Auf diese Weise ist gewährleistet, daß eine automatische Montageeinrichtung, die die gesamte Gleitringdichtung außen am Dichtungsgehäuse greift, auch das Drehmomentübertragungselement exakt so positionieren kann, daß es formschlüssig mit der Antriebswelle eingebaut werden kann. Dies wäre nicht möglich, wenn bei einer Verdrehung des Verbindungsmittels das Drehmomentübertragungselement sich relativ hierzu frei verdrehen könnte. Eine derart undefinierte Position des Drehmomentübertragungselements kann die Herstellung der formschlüssigen Verbindung zur Antriebswelle erschweren oder gar verhindern.

Wichtig ist dabei auch, daß der Formschluß des Drehmomentübertragungselementes mit dem Verbindungsmittel im eingebauten Zustand der Gleitringdichtung aufgehoben ist, da das Verbindungsmittel drehfest mit dem stationären Kompressorgehäuse verbunden ist, während das Drehmomentübertragungselement mit der Antriebswelle umläuft. Die Aufhebung der formschlüssigen Verbindung des Drehmomentübertragungselementes mit dem Verbindungsmittel kann auf besonders einfache Weise durch eine axiale Verschiebung des Drehmomentübertragungselementes im eingebauten Zustand der Gleitringdichtung erfolgen.

Die erfindungsgemäße Ausbildung des Drehmomentübertragungselements gewährleistet somit beim Einbau der Gleitringdichtung eine einfache und sichere Positionierung des formschlüssig mit der Antriebswelle zu verbindenden Teils des Drehmomentübertragungselements.

Damit ist eine schnelle und somit insbesondere bei großen Stückzahlen kostengünstige Montage bzw. Einbau der Gleitringdichtung in den Klimakompressor möglich. Selbstverständlich kann die erfindungsgemäße Ausbildung auch bei ähnlichen Anwendungsfällen, beispielsweise an Pumpen zum Einsatz kommen.

Besonders vorteilhaft ist es dabei, wenn das Drehmomentübertragungselement durch das Druckmittel vor und während des Einbaus der Gleitringdichtung von den Gleitringen weggerichtet gegen einen Anschlag des Dichtungsgehäuses gedrückt ist, aber nach dem Einbau der Gleitringdichtung von dem Anschlag des Dichtungsgehäuses in axialer Richtung entfernt ist. So wird eine besonders kompakte Einheit geschaffen, die alle Komponenten der Gleitringdichtung vor und während der Montage zusammenhält und die nach der Montage außer den zusammenwirkenden Dichtflächen der beiden Gleitringe keine weiteren Berührungspunkte zwischen feststehenden und rotierenden Bauelementen aufweist.

Für eine besonders einfache Ausführungsform ist es dabei günstig, wenn das Drehmomentübertragungselement mindestens einen radial nach außen weisenden Bereich aufweist, der vor und während des Einbaus der Gleitringdichtung gegen den Anschlag des Dichtungsgehäuses gedrückt ist und der an seinen Rändern jeweils einen Vorsprung aufweist, durch die der Anschlag seitlich derart umfaßt wird, daß das Drehmomentübertragungselement formschlüssig verdrehsicher am Dichtungsgehäuse gehalten ist.

Ein einwandfreier Betrieb der Gleitringdichtung kann vorteilhafter Weise dadurch erreicht werden, daß der Gegenring in dem Dichtungsgehäuse formschlüssig gegen Verdrehen gesichert gehalten ist. Besonders günstig ist dabei eine Zweiflachverbindung, die eine besonders für spröde Werkstoffe wie keramische oder Hartmetall-Sinterwerkstoffe geeignete Konstruktion darstellt. Die flächige Anlage an den beiden abgeflachten Stellen vermeidet punktuelle Kantenberührung, die zu Abplatzungen führen kann. An dieser Stelle wären auch andere Ausbildungen möglich wie Mehrflachs oder poligonähnliche Ausbildung der Berührungsflächen, wobei der Spalt zwischen der Innenkontur des Gehäuses und der Außenkontur des Gegenrings jeweils nur wenige Zehntel Millimeter beträgt.

Besonders vorteilhaft ist es ferner, wenn die Nebendichtungen formschlüssig an der Gleitringdichtung, insbesondere an dem Dichtungsgehäuse gehalten sind. Dadurch wird eine besonders kompakte Einheit geschaffen, in die auch die Nebendichtungen sicher integriert sind.

Dabei kann das Dichtungsgehäuse vorzugsweise eine Ringnut aufweisen, in der ein Dichtungsring als erste Nebendichtung derart einliegt, daß er über die äußere Mantelfläche des Dichtungsgehäuses herausragt.

Die zweite Nebendichtung kann in vorteilhafter Weise durch das Drehmomentübertragungselement an dem Dichtungsgehäuse gehalten sein.

Günstig ist es ferner, wenn das Druckmittel durch das Drehmomentübertragungselement an der Gleitringdichtung, insbesondere an dem Dichtungsgehäuse gehalten und zu der Antriebswelle zentriert ist. Dadurch ist das Druckmittel sicher an der Gleitringdichtung gehalten und befindet sich nach der Montage automatisch an der gewünschten Position.

Ein weiterer wesentlicher Aspekt bei der Anwendung der erfindungsgemäßen Gleitringdichtung an CO₂-Klimakompressoren in Kraftfahrzeugen ist die Standfestigkeit der Gleitringdichtung. Gerade bei den großen Stückzahlen der Kraftfahrzeugindustrie muß die Gleitringdichtung mit ihren Komponenten auch langfristig verschleißfrei arbeiten.

Es hat sich herausgestellt, daß es bei der Nebendichtung, die zwischen der Antriebswelle und dem drehfest daran montierbaren Gleitring vorgesehen ist und die mit dem verdichteten Medium in Kontakt kommt, bei den Betriebsbedingungen eines CO₂-Kältemittelkompressors zur sogenannten explosiven Dekompression kommt. Bei dieser Nebendichtung, die üblicherweise durch einen O-Ring aus Elastomeren gebildet ist, diffundiert das Gas von gasbeladenen Medien unter hohem Druck in den O-Ring ein. Bei Druckentlastung tritt das Gas wieder aus. Wenn der Druck plötzlich entlastet wird, erfolgt die Entgasung explosionsartig, wobei die Oberfläche des Elastomers an mehreren Stellen aufgerissen und der O-Ring zerstört wird. Bei einem Ausfall der Nebendichtungen ist die Funktion der gesamten Gleitringdichtung nicht mehr gewährleistet, was bei den hohen Stückzahlen beim Einsatz in Kraftfahrzeugen ein unakzeptabler Nachteil ist.

Um die langfristige Verschleißfestigkeit der Gleitringdichtung sicherzustellen, ist es besonders vorteilhaft, wenn die mit dem verdichteten Medium in Kontakt kommende zweite Nebendichtung aus Polytetrafluoräthylen gefertigt ist. Dadurch wird der Ausfall der Gleitringdichtung durch Zerstörung der zwischen der Antriebswelle und dem drehfest daran montierbaren Gleitring angeordneten Nebendichtung durch explosive Dekompression vermieden. Beim Einsatz in Kraftfahrzeugen in sehr großen Stückzahlen bedeutet das einen wesentlichen Vorteil.

Außerdem wird durch die Ausbildung der zweiten Nebendichtung aus Polytetrafluoräthylen eine Volumenzunahme durch Quellung unter chemischem Einfluß des abzudichtenden Mediums verhindert, was besonders wichtig ist, um die notwendige axiale Beweglichkeit des Gleitrings nicht zu behindern. Die zweite Nebendichtung fungiert hierbei als dynamische Dichtung, die die axialen Bewegungen des Gleitrings zuläßt. Die rein statisch beanspruchten Dichtungen zwischen Gegenring und Verbindungsmittel, sowie zwischen Verbindungsmittel und Kompressorgehäuse (erste Nebendichtung) sind unter diesem Aspekt nicht so kritisch und können aus Kostengründen aus geeigneten Elastomerwerkstoffen hergestellt sein.

Um die bei großen Stückzahlen besonders wichtige Verschleißfestigkeit der Gleitringdichtung weiter zu steigern, ist es besonders vorteilhaft, wenn beide Gleitringe aus gesintertem Hartmetall, insbesondere aus Wolframkarbid bzw. aus Siliciumkarbid gefertigt sind, wobei die Dichtflächen der beiden Gleitringe bei Betrieb des Kältemittelverdichters ständig im Mischreibungsbereich arbeiten.

Die Erfindung betrifft ferner einen mit einer Gleitringdichtung der vorstehend beschriebenen Art ausgestatteten CO₂-Kältemittelkompressor.

Weitere Vorteile und Merkmale der Erfindung ergeben sich aus der nachfolgenden Beschreibung und dem in den Zeichnungen dargestellten Ausführungsbeispiel.

Es zeigen:
- Figur 1:: Querschnitt einer erfindungsgemäßen Gleitringdichtung im eingebauten Zustand;
- Figur 2:: Teilausschnitt der Gleitringdichtung vor dem Einbau;
- Figur 3:: Schnittansicht A-A aus Figur 2;
- Figur 4:: Formschlüssige Zweiflachverbindung zwischen Gegenring und Dichtungsgehäuse.

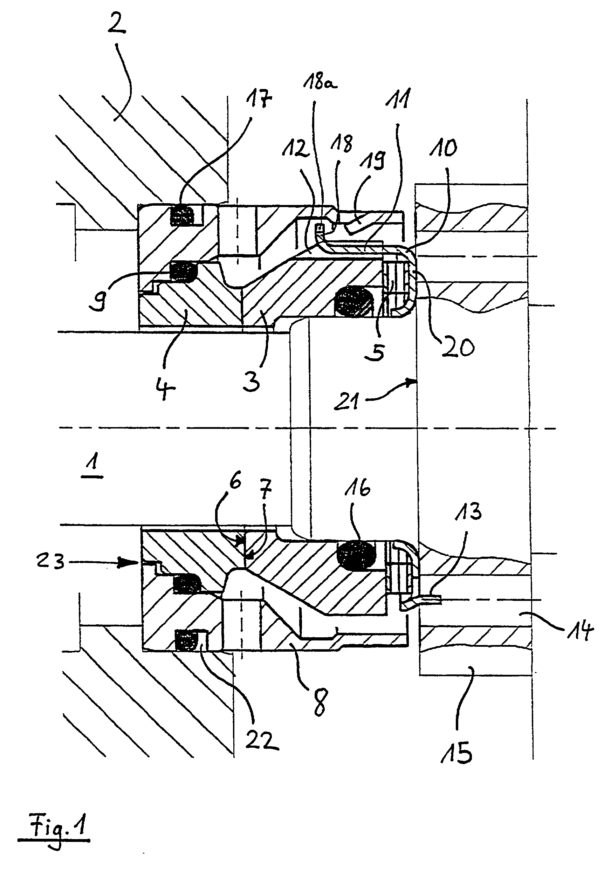

In Figur 1 ist der Durchtritt der Antriebswelle 1 eines CO₂―Kältemittelkompressors durch die Außenwand 2 des Kompressorgehäuses dargestellt. Die hohen Anforderungen an die Abdichtung des im Kompressorgehäuse enthaltenen CO₂―Ölgemisch an dieser Stelle werden durch eine erfindungsgemäße Gleitringdichtung erfüllt. Sie umfaßt einen Gleitring 3, der drehfest an der Antriebswelle 1 montiert ist, sowie einen stationären Gegenring 4, der mittelbar drehfest in der Außenwand 2 des Kompressors montiert ist. Der Gleitring 3 ist dabei axial verschiebbar auf der Antriebswelle 1 gehalten und wird durch eine als Druckmittel dienende Wellfeder 5 mit seiner Dichtfläche 6 gegen die Dichtfläche 7 des Gegenrings 4 gedrückt. Zwischen den zusammenwirkenden Dichtflächen 6 und 7 bildet sich bei Betrieb des Kompressors ein Dichtspalt aus, der die eigentliche Abdichtung übernimmt.

Radial außerhalb ist ein Dichtungsgehäuse 8 angeordnet, das sich in axialer Richtung über den Gleitring 3 den Gegenring 4 und die Wellfeder 5 erstreckt. In dem Dichtungsgehäuse 8, das bei der Montage drehfest in die Außenwand 2 des Kompressors eingebracht wird, ist der Gegenring 4 über eine Zweiflachverbindung 23 formschlüssig und somit drehfest gehalten. Bei der in Figur 4 gezeigten Zweiflachverbindung ist der nur einige Zehntel Millimeter breite Spalt zwischen Dichtungsgehäuse 8 und Gegenring 4 stark vergrößert dargestellt. Zwischen der Innenwandung des Dichtungsgehäuses 8 und der Außenseite des Gegenrings 4 ist ein O-Ring 9 zur Abdichtung angeordnet.

Ein als Blechziehteil ausgebildetes Drehübertragungselement 10 befindet sich axial verschiebbar an dem dem Gegenring 4 abgewandten Ende des Dichtungsgehäuses 8. Das Drehmomentübertragungselement 10 liegt mit mehreren in axialer Richtung sich erstreckenden Laschen 11 in jeweils einer Ausnehmung 12 des Gleitrings 3 ein. Außerdem erstrecken sich vom Gleitring 3 weggerichtete Vorsprünge 13 in axialer Richtung in Bohrungen 14 eines drehfest mit der Antriebswelle 1 umlaufenden Elementes 15. Somit ist der Gleitring 3 durch das Drehmomentübertragungselement 10 über Formschluß drehfest mit der Antriebswelle 1 verbunden.

Zur Abdichtung zwischen der Antriebswelle 1 und dem Gleitring 3 ist ein aus Polytetrafluoräthylen (PTFE) bestehender zweiter Dichtungsring 16 als Nebendichtung vorgesehen. Ein weiterer Dichtungsring 17 ist zwischen dem Dichtungsgehäuse 8 und der Außenwand 2 als erste Nebendichtung vorgesehen.

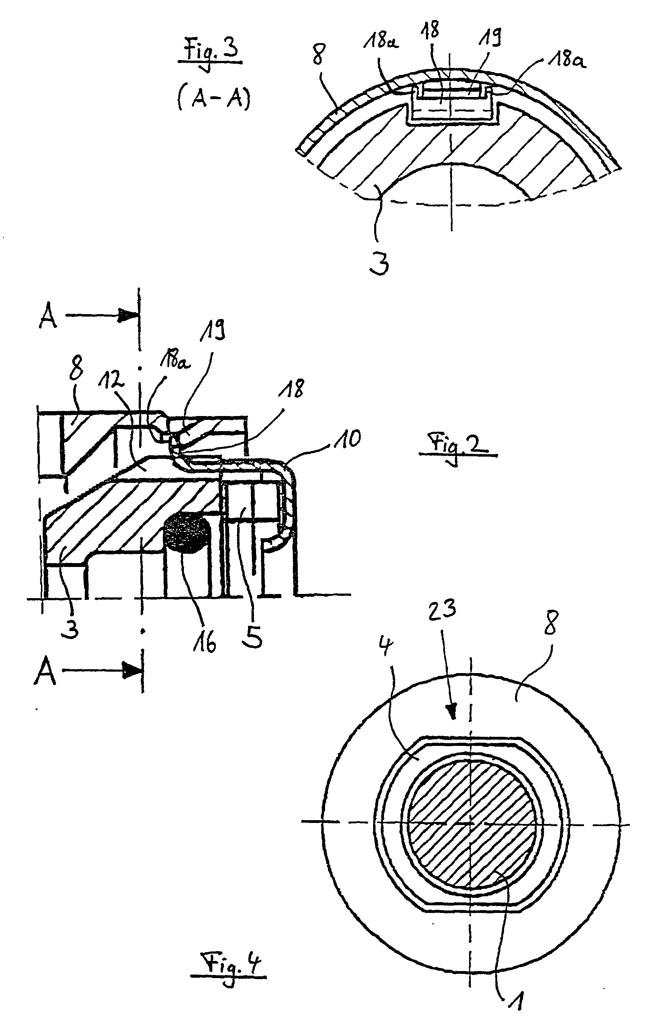

Die dem Gegenring 4 zugewandten Enden 18 der Laschen 11 des Drehmomentübertragungselementes 10 sind radial nach außen gebogen und liegen vor der Montage an jeweils einem nach innen vorstehenden Anschlag 19 des Dichtungsgehäuses 8 an. Dabei wird das Drehmomentübertragungselement 10 durch die Wellfeder 5 vom Gleitring 3 so weit weggedrückt, bis die Enden 18 an den Anschlägen 19 anliegen. Dabei weisen die Enden an ihren Rändern jeweils einen Vorsprung 18a auf, durch die der Anschlag 19 seitlich umfaßt wird (Figur 2 und 3). Auf diese Weise wird vor dem Einbau der Gleitringdichtung das Drehmomentübertragungselement 10 formschlüssig verdrehsicher am Dichtungsgehäuse 8 gehalten.

Im montierten Zustand liegt ein radialer Bereich 20 des Drehmomentübertragungselementes 10 an einem Absatz 21 der Antriebswelle 1 an, wodurch das Drehmomentübertragungselement 10 entgegen der Druckkraft der Wellfeder 5 in Richtung des Gegenrings 4 verschoben wird. Die Enden 18 der Laschen 11 sowie die Vorsprünge 18a haben dabei keinen Kontakt mehr mit den Anschlägen 19 des Dichtungsgehäuses 8, so daß sich das Drehmomentübertragungselement 10 und das Dichtungsgehäuse 8 ohne Berührung relativ zueinander drehen können.

Vor und während der Montage ist der aus PTFE bestehende Dichtungsring 16 und die Wellfeder 5 durch den radialen Bereich 20 des Drehmomentübertragungselementes 10 an der Gleitringdichtung gehalten. Der Dichtungsring 17 liegt als erste Nebendichtung in einer ringförmigen Nut 22 in der Außenseite des Dichtungsgehäuses 8 ein. Der Gegenring 4 liegt mit einem radial nach außen gerichteten Bereich über den O-Ring 9 an einem radial nach innen gerichteten Bereich des Dichtungsgehäuses 8 an. Auf diese Weise sind mit dem Gleitring 3, dem Gegenring 4, der Wellfeder 5, dem O-Ring 9, dem Dichtungsring 17 als erster Nebendichtung sowie dem aus PTFE bestehenden Dichtungsring 16 als zweiter Nebendichtung sämtliche Komponenten der Gleitringdichtung in dem Dichtungsgehäuse 8 bzw. dem darin verschiebbar angeordneten Drehmomentübertragungselement 10 gehalten. Alle Komponenten der Gleitringdichtung bilden auf diese Weise eine kompakte Einheit, die eine besonders einfache und mit einem hohen Automatisierungsgrad durchzuführende Montage erlaubt.

## Patentansprüche

1. Gleitringdichtung zur Abdichtung der Antriebswelle (1) des CO₂-Kältemittelkompressors eines Kraftfahrzeugs gegenüber dem ein CO₂-Ölgemisch enthaltenden Kompressorgehäuse (2),
mit einem Paar Gleitringe (3, 4), von denen einer als Gleitring (3) drehfest an der Antriebswelle (1) und der andere als Gegenring (4) drehfest am Kompressorgehäuse (2) montierbar ist,
mit mindestens einem Druckmittel (5), das die beiden Gleitringe (3, 4) derart axial aneinander drückt, daß sich bei Betrieb zwischen den zusammenwirkenden Dichtflächen (6, 7) der Gleitringe (3, 4) ein Dichtspalt bildet,
mit einem Dichtungsgehäuse (8), das die Gleitringe (3, 4) und das Druckmittel (5) radial außen umgibt und diese vor und während der Montage der Gleitringdichtung als Verbindungsmittel zusammenhält,
sowie mit einer ersten in die Gleitringdichtung integrierten Nebendichtung (17), die zwischen dem Kompressorgehäuse (2) und dem drehfest daran montierbaren Gegenring (4) wirkt,
und einer zweiten in die Gleitringdichtung integrierten Nebendichtung (16), die zwischen der Antriebswelle (1) und dem drehfest daran montierbaren Gleitring (3) wirkt,
**dadurch gekennzeichnet,**
**daß** die Gleitringdichtung ein relativ zum Dichtungsgehäuse (8) axial verschiebbar gelagertes Drehmomentübertragungselement (10) umfaßt,
welches zur drehfesten Montage des Gleitrings (3) an der Antriebswelle (1) sowohl mit dem Gleitring (3) als auch mit der Antriebswelle (1) formschlüssig verbindbar ist,
und welches vor und während des Einbaus der Gleitringdichtung formschlüssig oder kraftschlüssig drehfest mit dem Dichtungsgehäuse (8) verbunden ist,
und welches im eingebauten Zustand der Gleitringdichtung derart verschoben ist, daß der Formschluß oder Kraftschluß mit dem Dichtungsgehäuse (8) aufgehoben ist.

2. Gleitringdichtung nach Anspruch 1, **dadurch gekennzeichnet, daß** das Drehmomentübertragungselement (10) durch das Druckmittel (5) vor und während des Einbaus der Gleitringdichtung von den Gleitringen (3, 4) weggerichtet gegen einen Anschlag (19) des Dichtungsgehäuses (8) gedrückt ist und daß es im eingebauten Zustand der Gleitringdichtung von dem Anschlag (19) des Dichtungsgehäuses (8) entfernt ist.

3. Gleitringdichtung nach Anspruch 2, **dadurch gekennzeichnet, daß** das Drehmomentübertragungselement (10) mindestens einen radial nach außen weisenden Bereich (18) aufweist, der vor und während des Einbaus der Gleitringdichtung gegen den Anschlag (19) des Dichtungsgehäuses (8) gedrückt ist und der an seinen Rändern jeweils einen Vorsprung (18a) aufweist, durch die der Anschlag (19) seitlich derart umfaßt wird, daß das Drehmomentübertragungselement (10) formschlüssig verdrehsicher am Dichtungsgehäuse (8) gehalten ist.

4. Gleitringdichtung nach einem der vorherigen Ansprüche, **dadurch gekennzeichnet, daß** der Gegenring (4) in dem Dichtungsgehäuse (8) formschlüssig, vorzugsweise über eine Zweiflachverbindung (23), gegen Verdrehen gesichert ist.

5. Gleitringdichtung nach einem der vorherigen Ansprüche, **dadurch gekennzeichnet, daß** die Nebendichtungen (16, 17) formschlüssig an der Gleitringdichtung, insbesondere an dem Dichtungsgehäuse (8) gehalten sind.

6. Gleitringdichtung nach Anspruch 5, **dadurch gekennzeichnet, daß** das Dichtungsgehäuse (8) eine Ringnut (22) aufweist, in der ein Dichtungsring (17) als erste Nebendichtung derart einliegt, daß er über die äußere Mantelfläche des Dichtungsgehäuses (8) herausragt.

7. Gleitringdichtung nach einem der vorherigen Ansprüche, **dadurch gekennzeichnet, daß** die zweite Nebendichtung (16) durch das Drehmomentübertragungselement (10) an der Gleitringdichtung gehalten ist.

8. Gleitringdichtung nach einem der vorherigen Ansprüche, **dadurch gekennzeichnet, daß** das Druckmittel (5) durch das Drehmomentübertragungselement (10) an der Gleitringdichtung gehalten und zu der Antriebswelle (1) zentriert ist.

9. Gleitringdichtung nach einem der vorherigen Ansprüche, **dadurch gekennzeichnet, daß** die zweite Nebendichtung (16) aus Polytetrafluoräthylen besteht.

10. Gleitringdichtung nach einem der vorherigen Ansprüche, **dadurch gekennzeichnet, daß** beide Gleitringe aus gesintertem Hartmetall, insbesondere aus Wolframkarbid bzw. aus Siliciumkarbid gefertigt sind, wobei die Dichtflächen der beiden Gleitringe bei Betrieb des Kältemittelverdichters ständig im Mischreibungsbereich arbeiten

11. CO₂-Kältemittelkompressor für Kraftfahrzeuge, **dadurch gekennzeichnet, daß** zur Abdichtung der Antriebswelle (1) gegenüber dem ein CO₂-Ölgemisch enthaltenden Kompressorgehäuse (2) eine Gleitringdichtung nach einem der vorherigen Ansprüche vorgesehen ist.

## Claims

1. A sliding ring seal for sealing the drive shaft (1) of the CO₂ refrigerant compressor of a motor vehicle from the compressor housing (2), which contains a CO₂-oil mixture, comprising a pair of sliding rings (3, 4), one of which can be mounted rotationally fixed on the drive shaft (1) as a sliding ring (3), and the other of which can be mounted rotationally fixed on the compressor housing (2) as a counter-ring (4),
comprising at least one pressure means (5) which presses the two sliding rings (3, 4) axially together so that in operation a seal gap is formed between the cooperating seal faces (6, 7) of the sliding rings (3, 4),
comprising a seal housing (8) which radially outwardly surrounds the sliding rings (3, 4) and the pressure means (5) and holds them together as an attachment means before and during the installation of the sliding ring seal,
and also comprising a first auxiliary seal (17) which is incorporated in the sliding ring seal and which acts between the compressor housing (2) and the counter-ring (4) which can be mounted rotationally fixed thereon,
and comprising a second auxiliary seal (16) which is incorporated in the sliding ring seal and which acts between the drive shaft (1) and the sliding ring (3) which can be mounted rotationally fixed thereon,
**characterised in that**
the sliding ring seal comprises a torque transmission element (10) which is mounted so that it is axially displaceable in relation to the seal housing (8),
and which can be positively attached both to the sliding ring (3) and to the drive shaft (1) for mounting the sliding ring (3) rotationally fixed on the drive shaft (1),
and which is positively or non-positively attached rotationally fixed to the seal housing (8) before and during the installation of the sliding ring seal,
and which in the installed state of the sliding ring seal is displaced so that its positive attachment or non-positive attachment to the seal housing (8) is removed.

2. A sliding ring seal according to claim 1, **characterised in that** before and during the installation of the sliding ring seal the torque transmission element (10) is pressed by the pressure means (5) away from the sliding rings (3, 4) against a stop (19) on the seal housing (8), and that in the installed state of the sliding ring seal it is remote from the stop (19) on the seal housing (8).

3. A sliding ring seal according to claim 2, **characterised in that** the torque transmission element (10) comprises at least one region (18) which points radially outwards and which before and during the installation of the sliding ring seal is pressed against the stop (19) on the seal housing (8), and which has a projection (18a) on each of its edges by which the stop (19) is laterally surrounded so that the torque transmission element (10) is positively held, secured against twisting, on the seal housing (8).

4. A sliding ring seal according to any one of the preceding claims, **characterised in that** the counter-ring (4) is positively secured against twisting in the seal housing (8), preferably via a double-face joint (23).

5. A sliding ring seal according to any one of the preceding claims, **characterised in that** the auxiliary seals (16, 17) are positively held on the sliding ring seal, particularly on the seal housing (8).

6. A sliding ring seal according to claim 5, **characterised in that** the seal housing (8) comprises an annular groove (22) in which a sealing ring (17) is inserted as a first auxiliary seal so that it protrudes beyond the external curved surface of the seal housing (8).

7. A sliding ring seal according to any one of the preceding claims, **characterised in that** the second auxiliary seal (16) is held on the sliding ring seal by the torque transmission element (10).

8. A sliding ring seal according to any one of the preceding claims, **characterised in that** the pressure means (5) is held on the sliding ring seal by the torque transmission element (10) and is centred in relation to the drive shaft (1).

9. A sliding ring seal according to any one of the preceding claims, **characterised in that** the second auxiliary seal (16) consists of polytetrafluoroethylene.

10. A sliding ring seal according to any one of the preceding claims, **characterised in that** both sliding rings are made of sintered hard metal, particularly of tungsten carbide or of silicon carbide, wherein the seal faces of the two sliding rings permanently operate in the range of mixed friction during the operation of the refrigerant compressor.

11. A CO₂ refrigerant compressor for motor vehicles, **characterised in that** a sliding ring seal according to any one of the preceding claims is provided for sealing the drive shaft (1) from the compressor housing (2), which contains a CO₂-oil mixture.

## Revendications

1. Garniture à bague glissante pour l'étanchéité de l'arbre d'entraînement (1) du compresseur frigorifique à CO₂ d'un véhicule automobile par rapport à un carter de compresseur (2) contenant un mélange d'huile/ CO₂,
avec une paire de bagues glissantes (3, 4), dont l'une peut être montée comme bague glissante (3) solidaire en rotation sur l'arbre d'entraînement (1) et l'autre comme contre-bague (4) solidaire en rotation sur le carter de compresseur (2),
avec au moins un agent de pression (5), qui appuie les deux bagues glissantes (3, 4) dans un plan axial l'une sur l'autre de telle façon qu'il se forme un jeu lors du fonctionnement entre les surfaces d'étanchéité (6, 7) interactives des bagues glissantes (3, 4),
avec un carter de garniture (8), qui entoure les bagues glissantes (3, 4) et l'agent de pression (5) dans le sens radial vers l'extérieur et les maintient avant et pendant le montage de la garniture à bague glissante comme moyens de liaison,
et avec une première garniture secondaire (17) intégrée dans la garniture à bague glissante, qui agit entre le carter de compresseur (2) et la contre-bague (4) pouvant être montée dessus solidaire en rotation,
et une deuxième garniture secondaire (16) intégrée dans la garniture à bague glissante, qui agit entre l'arbre d'entraînement (1) et la bague glissante (3) pouvant être montée dessus solidaire en rotation,
**caractérisée**
**en ce que** la garniture à bague glissante comprend un élément de transmission de couple (10) logé de façon coulissante dans le sens axial par rapport au carter de garniture (8),
qui, pour le montage solidaire en rotation de la bague glissante (3) sur l'arbre d'entraînement (1), peut être relié par conjugaison de forme aussi bien avec la bague glissante (3) qu'avec l'arbre d'entraînement (1),
et qui est relié par conjugaison de forme ou adhérence solidaire en rotation au carter de garniture (8) avant et pendant le montage de la garniture à bague glissante,
et qui est déplacé dans l'état monté de la garniture à bague glissante de telle sorte que la liaison mécanique par conjugaison de forme ou par adhérence avec le carter de garniture (8) est supprimée.

2. Garniture à bague glissante selon la revendication 1, **caractérisée en ce que** l'élément de transmission de couple (10) est appuyé par l'agent de pression (5) avant et pendant le montage de la garniture à bague glissante, en s'éloignant des bagues glissantes (2, 4), contre une butée (19) du carter de garniture (8) et **en ce qu'**il est éloigné de la butée (19) du carter de garniture (8) dans l'état monté de la garniture à bague glissante.

3. Garniture à bague glissante selon la revendication 2, **caractérisée en ce que** l'élément de transmission de couple (10) présente au moins une zone (18) dirigée radialement vers l'extérieur, qui est appuyée contre la butée (19) du carter de garniture (8) avant et pendant le montage de la garniture à bague glissante et qui présente sur ses bords respectivement une saillie (18a), par laquelle la butée (19) est entourée sur le côté de telle sorte que l'élément de transmission de couple (10) est maintenu par conjugaison de forme et de façon solidaire en rotation sur le carter de garniture (8).

4. Garniture à bague glissante selon l'une quelconque des revendications précédentes, **caractérisée en ce que** la contre-bague (4) est bloquée contre la torsion dans le carter de garniture (8) par conjugaison de forme, de préférence au moyen d'un assemblage dièdre (23).

5. Garniture à bague glissante selon l'une quelconque des revendications précédentes, **caractérisée en ce que** les garnitures secondaires (16, 17) sont maintenues par conjugaison de forme sur la garniture à bague glissante, en particulier sur le carter de garniture (8).

6. Garniture à bague glissante selon la revendication 5, **caractérisée en ce que** le carter de garniture (8) présente une rainure annulaire (22), dans laquelle une bague d'étanchéité (17) est insérée comme première garniture secondaire de telle sorte qu'elle dépasse de l'enveloppe extérieure du carter de garniture (8).

7. Garniture à bague glissante selon l'une quelconque des revendications précédentes, **caractérisée en ce que** la seconde garniture secondaire (16) est maintenue par l'élément de transmission de couple (10) sur la garniture à bague glissante.

8. Garniture à bague glissante selon l'une quelconque des revendications précédentes, **caractérisée en ce que** l'agent de pression (5) est maintenu par l'élément de transmission de couple (10) sur la garniture à bague glissante et est centré par rapport à l'arbre d'entraînement (1).

9. Garniture à bague glissante selon l'une quelconque des revendications précédentes, **caractérisée en ce que** la seconde garniture secondaire (16) est à base de polytétrafluoréthylène.

10. Garniture à bague glissante selon l'une quelconque des revendications précédentes, **caractérisée en ce que** les deux bagues glissantes sont fabriquées à base de métal dur fritté, en particulier à base de carbure de tungstène ou de carbure de silicium, les surfaces d'étanchéité des deux bagues glissantes travaillant constamment dans la zone de frottement mixte lors du fonctionnement du compresseur frigorifique.

11. Compresseur frigorifique à CO₂ pour véhicule automobile, **caractérisé en ce qu'**il est prévu une garniture à bague glissante selon l'une quelconque des revendications précédentes pour l'étanchéité de l'arbre d'entraînement (1) par rapport au carter de compresseur (2) contenant un mélange d'huile/ CO₂.
